# EUROPEAN PATENT APPLICATION

(11) **EP 3 910 574 A1**
(43) Date of publication of application: **17.11.2021**
(21) Application number: 20174848.0
(22) Date of filing: 14.05.2020
(51) Int. Cl.: G06Q 10/10

(54) **METHOD FOR ASSESSING PERSONALITY PROFILE OF PLAYER AND COMPUTER PROGRAM PRODUCT IMPLEMENTING SAME**

(71) Applicant: Game Time Project Sp. z o.o., 50-127 Waroclaw (PL)
(72) Inventor: TOMCZAK, Pawel, 55-093 Kielczów (PL); ZJAWIONY, Piotr, 54-152 Wroclaw (PL)
(74) Representative: Dargiewicz, Joanna

(57) **Abstract**

The subject of the present invention is the method of assessment of the personality profile of a player comprising the stages in which the player is given access to the game environment, in which he is identified with an identifier, the game environment is three-dimensional and imitates work in an office environment, in which the player performs tasks; the behaviour of a player is measured during and between in-game tasks; the intensity of the following personality traits of a player is determined based on the measurements of behaviour: sense of effectiveness, location of control, searching for information, predicting problems, creativity, analyticity, impulsiveness, risk perception; and the intensity of the personality traits of a player is presented in the form of a report. The subject of the invention is also a computer program product.

## Description

The present invention relates to a method of assessment of the personality profile of a player and a computer program product implementing this method.

### FIELD OF THE INVENTION

The present invention relates to the field of human resources management, and more specifically to supporting the process of assessment of interviewees and employees. In particular there are described methods and systems for assessment of interviewee or employee for a particular role, as well as a computer program product, representing the above-mentioned systems and implementing the above-mentioned methods. In particular there are described methods and systems for supporting the assessment of a match of interviewee or employee for a particular role, as well as a computer program product representing the above-mentioned systems and implementing the above-mentioned methods. Computer program product may be a computer game with a platform.

### BACKGROUND OF THE INVENTION

The problem of assessment if a particular interviewee or employee is appropriate for a particular position has been existent in the field of human resources management for many years. The problem is of great importance in every industry, regardless of the level of qualifications - employment of unsuitable employee always leads to additional costs related to a missed recruitment process and the need to repeat it. It is the employees who in fact pick from available job offers, since in case of an unattractive offer or a too complex recruitment process they can easily give up on a particular employer and take part in another recruitment process. Further issue arises from the need of using innovative solutions relating to the recruitment process, which will encourage the best employees on the market.

Current recruitment processes are largely driven by decisions based on CVs or resumes, but can also make use of Assessment Centre method, questionnaire tools, in-depth interviews and simulations. It is a significant difficulty to compare CVs between one another- both automatically - and even by recruiters, since each interviewee presents different information at a different precision level. As a result recruiter is faced with a significant amount of facts that are difficult to relate.

It should also be mentioned that in the recruitment process, psychological and psychometric tests have been used for a long time, aimed at examining certain personality traits of interviewee or employee. Until now, these studies have usually been carried out in a survey system (as questionnaires) or staging (with the help of additional people), but may also use Assessment Centre methods, in-depth interviews and simulations.

The aim of the invention was to develop an advanced recruitment and assessment system based on a computer game, which, thanks to the analytical mechanisms used, which are based on a unique set of predictors of success and business behaviour, would allow, in the course of the game, to effectively assess an interviewee for an office employee at various levels or to assess employed staff, especially at the management level, thus increasing the probability of success in finding the right employee

During the development of the invention, market needs were identified, according to which methods are sought to simplify recruitment and increase the effectiveness of the processes carried out to enlist employee, while increasing the attractiveness of the measures used.

According to the market analysis, only 40% of recruiters and managers are satisfied with the recruitment results, which proves the low efficiency of the processes. Employment of an unsuitable employee entails financial consequences that may increase the cost of recruitment several times and increases with the position level. This applies in particular to higher positions, as in their case it is more difficult to find an employee and the more costly is his mismatch. One of the tools to minimize the risk of mismatch of interviewee or employee are psychometric tests. Their implementation, however, often requires specialist knowledge and additional competences, which potentially involve additional costs. Such tests are also conducted on the basis of questionnaires, and their implementation is time-consuming, which is mentioned by representatives of the recruiters industry as a factor limiting their use. On the market, they are looking for tools that allow, on the one hand, to shorten the recruitment time and its costs by increasing effectiveness, and, on the other, to attract a potential employee. According to industry data and consultations with market representatives implementing large-scale recruitment processes, one of the desirable and highly rated by both employers and employees is the concept of a video game as a tool supporting the recruitment process of employee.

The use of this type of tool brings benefits for both parties - it affects the positive assessment of the company by the employee, translating into a greater number of submitted applications, and at the same time gives comfort to the recruited person who, with the proper design of such a game, can additionally enjoy the game itself.

The above-mentioned, in connection with the potential of the recruitment market (value of the Polish market valued at 1.62 billion EUR and a 15% growth dynamics), as well as the fact that there is no recruitment game on the market presenting high added value in the recruitment process, especially in recruitment for higher level positions, prompted the Inventors to create an automated tool for performing a psychometric test in the form of a computer game according to the invention, which will allow for easy, quick and, above all, effective assessment of an interviewee for an office employee at various levels or the assessment of the staff employed, including management, as generating particularly high costs.

In order to determine the appropriate theoretical foundations of the tool, the authors have made a broad analysis of the subject in the field of business psychology and decision-making psychology. This analysis was aimed at selecting key variables in the form of psychological traits and constructs, which are the strongest predictors of professional success, commitment, willingness to develop and motivation to work.

As a result of the analysis, 8 optimal psychological features were selected (Sense of Effectiveness, Location of Control, Information Seeking, Problem Prediction, Creativity, Analyticity, Impulsivity, Risk Perception), which, on the basis of the analysed materials, are the best predictors of the indicated behaviours, showing high significance in the assessment of effectiveness of an office employee, with particular emphasis on senior management. These features became the basis of a psychometric study carried out on the basis of the game according to the invention.

The developed system consists of an appropriate psychometric measurement tool in the form of a computer game and an online platform with the use of which the results of the game will be presented, and with the use of which the game will be made available to users.

The system, through the use of advanced analytical algorithms, based on the mechanisms of big data, visual analytics and machine learning, will allow for an automated psychometric assessment of the recruited person in terms of psychological constructs selected by the present inventors. Measurement in the game, according to the assumptions of the Inventors, will be made in at least 8 mini-games.

The game of the invention was embedded in an office environment. The player, moving with a character with features and appearance that maximize the level of immersion, performs tasks similar in nature to those carried out in the target environment. The system is based on at least 11 000 measurement points, records the behaviour of players and interprets them from the perspective of the psychological constructs adopted by the present inventors. Based on the decisions made and problem solving strategies, the psychological characteristics of a player is determined.

Among the features that distinguish the solution of the invention from the recruitment games known in the art are:
- a set of psychological features not used in any recruitment game so far, representing a high value for the assessment of interviewees at various levels and office positions (games known in the state of the art are aimed at examining psychological constructs of relatively low significance for such positions) and employees,
- unprecedented quality and accuracy of the test carried out based on the game, thanks to the correlation with as many as 10 recognized traditional tools of psychometric testing (games known in the art do not refer to more than 1),
- intelligent self-improvement mechanisms based on data collected during the games,
- the possibility of creating your own employee profile, which is a reference point for the assessment of the recruited person
- a high level of realism in the game through the use of a world similar to the target environment (i.e. office, faithfully reproduced character),
- the ability to personalize the world in the game,
- advanced and extensive system for presenting the results of the study at 3 levels of detail and scope of information.

### DESCRIPTION OF THE STATE OF THE ART

United States patent application no. US 10,635,752 discloses the use of a bot to interview an interviewee. The application emphasized that classic recruitment solutions may be useful for a recruiter in the recruitment process. The Applicant discloses that in the course of the conversation with the bot, certain personality traits of the interviewee will be established by asking the bot questions that will be somewhat similar to the classic psychometric questionnaires. However, in the opinion of the Applicant, by interlacing "general" questions with questions that are equivalent to psychometric questionnaires, the interviewee will not know which questions will affect the assessment of his personality traits and will therefore respond more honestly.

In the case of EP3394808, the Applicant discloses that the recruitment support system pairs the interviewees with job offers based on the results of one or more psychometric tests or tasks. The purpose of these tests is to measure certain emotional and cognitive characteristics of the interviewee and with them to identify the strengths and weaknesses of the interviewee. Tests include e.g. analogue reasoning test, button press speed measurement, pattern recognition (Raven test), or a Tower of London task. The Applicant therefore discloses the use of implementing puzzle games or computer-implemented psychological test elements to test the interviewee's characteristics. In addition, in the solution according to this application, only the results obtained in a given task are analysed, and not the comprehensive behaviour of the participant during recruitment or the method of achieving the result.

Finally, United States patent application No. US2018280807 discloses an automated recruiting game for identifying interviewees with desired characteristics. The game according to this application may contain a game tailored to identify many desirable characteristics of the interviewee and inform the interviewee about the further steps of the recruitment process based on their in-game performance. Applicant discloses that the game can be tailored to a particular position. The applicant specifically points out that the game can be puzzles, riddles, but also first person (FPP) or third person (TPP) games and strategy games. Apart from the above examples, the Applicant does not specify the rules governing FPP / TPP games or the nature of the collected data, only that he assesses the game results, but in isolation from the interviewee's personality traits.

In the light of the above-mentioned state of the art of assessing interviewees for work in the recruitment or employee recruitment process, there is still a need to develop an automated tool allowing for a reliable assessment of the psychological profile.

### SUMMARY OF THE INVENTION

Thus, the subject of the present invention is the method assessment of the personality profile of a player comprising the steps in which:
a) access to the game environment is made available to the player, in which he is identified by an identifier, the game environment is three-dimensional and imitates work in an office environment in which the player performs tasks;
b) the behaviour of a player is measured during and between in-game tasks;
c) the intensity of the following personality traits of a player is determined based on the behaviour measurements made:
   - sense of effectiveness,
   - location of control,
   - searching for information,
   - predicting problems,
   - creativity,
   - analyticity,
   - impulsiveness,
   - risk perception;
   and the intensity of the personality traits of a player is presented in the form of a report.

Preferably, in step c), the intensity of the following characteristics of a player is additionally assessed on the basis of the behaviour measurements made, comprising:
- numerical skills,
- visual-spatial abilities,
- working memory.

Preferably, the classification of the intensity of the personality traits in step c) is made with the use of deep neural networks, enhanced decision trees using gradient amplification or adaptive neural networks.

Preferably, the player is an employee in the position or an interviewee for the position.

Preferably, the model intensity of features for a given position is additionally determined based on a set of data obtained by the current employee in the given position.

The invention also relates to a computer program product comprising a computer readable medium comprising encoded computer executable code, the computer executable code being adapted to perform an implemented method comprising:
a) providing an assessment system of the personality profile of a player, which includes:
   - a game with tasks environment module,
   - a measurement module,
   - a classification module,
   - a presentation module,
b) providing by the game with tasks environment module of a three-dimensional game environment, in which computerized tasks are presented, where these tasks are related to the work environment in the office presented in the game;
c) measuring, by the measurement module, the behaviour of a player in the game and during the carrying out of tasks, creating a data set for a given player;
d) carrying out the classification of a player using the classification module based on the data collected by the measurement module for the following personality traits:
   - sense of effectiveness,
   - location of control,
   - searching for information,
   - predicting problems,
   - creativity,
   - analyticity,
   - impulsiveness,
   - risk perception;
   determining the degree of intensity of each of the above characteristics for a player;
e) generating a report by the presentation module for the entity carrying out the process, in which the result of the classification of the intensity of each of the tested personality traits of a player is presented.

Preferably, the implemented method in step d) further comprises performing a classification of a player using the classification module on the basis of the data collected by the measurement module data for the following player characteristics comprising:
- numerical skills,
- visual-spatial abilities,
- working memory;
determining the degree of intensity of each of the above characteristics for a player.

Preferably, the player personality profile scoring system further comprises:
- a model module,
- a reference model defined for a given job position,
- a comparator module,
- a scoring module,
and the method further comprises the steps, in which
a) the model module creates a model of the assessed player on the basis of the result from the classifying module including the intensity of the personality traits under study,
b) the comparator module compares the assessed player's model with the reference model,
c) the scoring module determines the fit of the tested player for a given workplace based on the comparator module results.

The solution according to the invention is therefore used to support the recruitment and assessment process through the use of a psychometric tool in the form of a computer game.

Thus, the method of classification of interviewee or employee is described to the intensity of the personality trait correct for them. Method is based on a computer program in the form of a computer game, connected with the results calculation system, built into the access platform, where the results of the game based on performing tasks in a three-dimensional office environment are collected. These tasks, called "mini-games", provide behavioural data that underpins the classification process.

It should be noted that the nature of the tasks, as a rule, goes beyond the classical psychometric and psychological tests. The classification module analyses not only the time and results obtained by the player during the execution of tasks, but also the behaviour between tasks in a virtual office environment. Importantly, behaviours such as the initiative in establishing contacts with characters in the game or the method of moving around the game world are analysed. This means that the player is also tested when he apparently does not perform any particular task, and this may lead to higher reliability of the assessment of the behaviour of a player. The analysis of all measurement points allows for the classification of a player in terms of certain (important from the point of view of effectiveness in the work environment) personality traits. It can be run on the basis of machine learning algorithms, the result of which is then presented by the presentation module in the form of a report for the recruiter.

The invention was implemented in the form of a computer game containing a set of tasks performed by an interviewee or employee in a virtual office environment. The invention uses statistical algorithms to reliably and fairly determine the personality traits of interviewee or employee based on the collected data. The aim of the present invention is to select a person in the recruitment or assessment process with a simple and effective method, while at the same time building the involvement of interviewee or employee.

The invention is an internet platform closely integrated with the recruitment tool in the form of a game, consisting of many different tasks. The invention also allows a wide personalization of the game environment, including introducing a number of visual elements specific to the recruiter. This is a benefit in the form of an additional channel for marketing activities, and also allows the introduction of interviewee or employee into the world of company values.

According to the invention, the identification and measurement of the features is performed on the basis of several thousand measurement points, the data of which are used for the classification process based on machine learning. Inference about the psychological profile of interviewee or employee is based on his actual behaviour (and not only declarations). This significantly increases the value of the said inference in relation to the functioning of interviewee or employee in the work environment. The evaluation determines the psychological features (personality traits) well-established in science, determining the effectiveness of functioning in the professional environment. Full automation of generating feedback reports makes the recruitment process faster, with less involvement of the recruiter team. This enables the assessment, comparison and filtering of interviewees and employees aimed at selecting those best suited to the position.

The invention therefore allows the measurement of psychological features associated with the highest performance at work, allowing to obtain information that cannot be obtained by traditional methods used so far in the recruitment process.

Additionally, it should be noted that the information on the psychological profile of interviewee or employee allows to identify his predispositions, inclinations and characteristic features of functioning at work. This has a number of benefits, such as the ability to properly design the work environment for an interviewee or employee, shape their development, set goals or assign duties in which they works best.

Therefore, the invention makes it possible to find interviewees and employees closest to the expectations of the recruiting entity. The system of the invention makes it possible to define the profile of the desired behaviour and the characteristics of interviewee or employee required in a given working environment.

The summary of the game, according to the invention, takes into account 8 psychological features and 3 characteristics of a player that make up the personality profile of the player. The analyzed personality traits (also called psychological traits) are:
1. sense of effectiveness (ps),
2. location of control (uk),
3. searching for information (pi),
4. predicting problems (pp),
5. creativity (k),
6. analyticity (a),
7. impulsiveness (i),
8. risk perception (pr).

The analysed characteristics of a player (also called global variables) are:
1. numerical skills,
2. visual-spatial abilities,
3. working memory.

In the examination of interviewee or employee by the computer program product, by the method and by the system according to the invention, every behaviour and decision is recorded. On their basis, the intensity of the personality traits of interviewee or employee is classified, which are finally described on a 9-point scale.

In this description, unless otherwise stated, the terms "test taker", "user", "player" and "interviewee" mean a person participating in the recruitment process for a specific position or a person working in a given position subject to the evaluation process.

### BRIEF DESCRIPTION OF THE DRAWINGS

Figures 1-3 show the ROC charts for the classification of psychological features Sense of Effectiveness, Location of Control and Creativity.
Figure 4 shows a view of a virtual office environment implemented in the game.
Figure 5 shows an exemplary task description presented to an interviewee in the game.
Figures 6-8 show exemplary implementation of tasks presented to the interviewee in the game.

### DETAILED DESCRIPTION OF THE INVENTION

### Embodiment 1

In one embodiment of the invention machine learning classifiers implemented in *Google Cloud AutoML Tables* were used. In this embodiment the following were used, among others:
- feedforward deep neural network,
- gradient boosted decision trees,
- adaptive neuron networks (*AdaNet*)*.*

In this embodiment, at the design stage, numerous measurement points were identified that are related to personality traits. Then, for the collected behavioural data, the process of teaching classifiers for these features, described below, was carried out.

The inventors of the present invention, based on the results of psychometric tests, the results of the games played and the knowledge from the field of the art, made the determination of the observation in the context of the intensity of a given psychometric feature (belonging to a "low" or a "high" class).

Then, the training, test and validation sets were prepared.

In this embodiment, the set of observations has been randomly divided into three basic subsets:
Test set (TEST) - a balanced (in terms of assignment to classes) randomly generated data set. The test set is used for the final validation of the classifier and does not participate in the classifier training process.
Validation set (VALIDATE) - a balanced (in relation to the assignment to classes) randomly generated data set. The validation set is used during the classifier training process in order to optimize the hyperparameters of the selected classifier (e.g. in the case of neural networks, the number of hidden layers).
Training set (TRAIN) - this is the entire remaining marked data set used to perform the classifier training process (e.g. in the case of neural networks by modifying the weights of neurons using the error back propagation algorithm).

In this embodiment the learning and optimization process of the selected model was then carried out of the applied classification model.

The application of the learning procedure for the applied set of classifiers also included optimization of the applied models in relation to the validation set. The optimization of the classifier including the classification model is performed by analysing the area under the curve of the ROC (receiver operator characteristic) plot. It consists in choosing the best model leading to the maximization of the area under the curve of the ROC plot. The closer the AUC value is to 1, the better the optimized classifier is.

The embodiment also includes the validation of the classifier, because during the design and implementation of the classifying module, the goal was to determine the classifier with the highest "quality". In the technical field, classification quality is measured by the following set of parameters (relative to the selected class):
- accuracy = TP + TN / (TP + TN + FP + FN),
- precision = TP / (TP + FP),
- recall = TP / (TP + FN),
- F1 measure = 2^{∗}(*precision*^{∗}*recall*)/(*precision*+*recall*), thus it is the harmonic mean of precision and recall, and values close to 1 mean a good classification for precision and recall,
where: TP means true positive samples (observations of a given class, correctly classified as belonging to this class), TN means true negative samples, FP means false positive samples and FN means false negative samples.

Above-mentioned coefficients were calculated only on the test set, which did not participate in the classifier training process.

The following sets of data as shown in table 1 below were used in one embodiment of the invention. These data were used in individual studies and include the name of the tested psychological feature, the total number of observations and the number of observations in each class. A classification was also made for the terms numerical abilities, visual-spatial abilities and working memory, which are not personality traits but some kind of global variables that reflect certain characteristics of the individual. These characteristics are marked in italics in Table 1.

**Table 1. The distribution between classes of observations for individual personality traits.**

| **Name of the personality trait** | **Number of observations** | **First class (%)** | **Second class (%)** |
|---|---|---|---|
| sense of effectiveness | 172 | ∼ 62.21% (low) | ∼ 37.79% (high) |
| location of control | 166 | ∼ 53.61% (internal) | ∼ 46.39% (external) |
| predicting problems | 175 | ∼ 55.43% (low) | ∼ 44.57% (high) |
| searching for information | 190 | ∼ 57.89% (low) | ∼ 42.11% (high) |
| creativity | 166 | ∼ 44.26% (low) | ∼ 55.74% (high) |
| analyticity | 166 | ∼ 47.59% (low) | ∼ 52.41 % (high) |
| impulsiveness | 166 | ∼ 30.72% (low) | ∼ 69.28 % (high) |
| risk perception | 168 | ∼ 65.48% (low) | ∼ 34.52% (high) |
| *numerical skills* | 149 | ∼ 55.7%(low) | ∼ 44.3% (high) |
| *visual-spatial abilities* | 183 | ∼ 49.18% (low) | ∼ 50.82% (high) |
| *working memory* | 160 | 56.25% (low) | 43.75% (high) |

Examples of parameters determining the quality of the created classifiers are presented below.

### Embodiment 1A - Sense of Effectiveness

The result of the classification against the psychological term sense of effectiveness (assuming the values "low" or "high") is presented in the following table 2.

**Table 2. The result of classification against the term sense of effectiveness.**

| Labels with the value "true" | Predicted labels | |
|---|---|---|
| | low | high |
| low | 100% | - |
| high | 10% | 90% |

The following values were obtained for this term:
F1 = 0.947, accuracy = 95.8%, precision = 100%, recall = 90%.

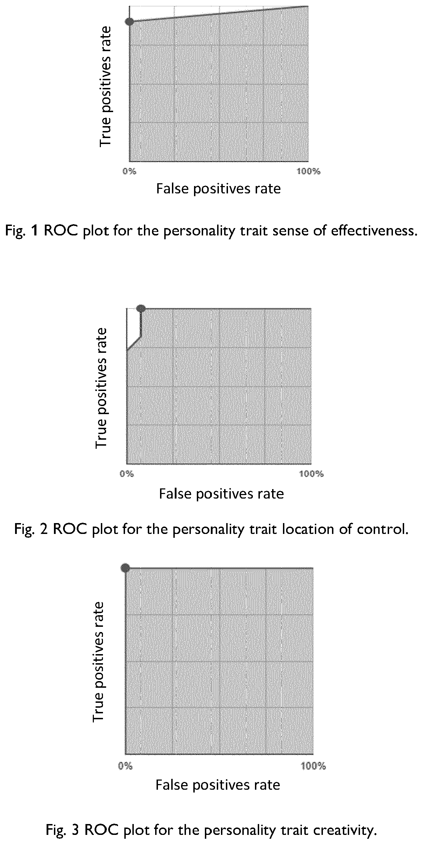

Fig. 1 shows the ROC plot for the classification of the psychological term sense of effectiveness, in which the area under the curve is 0.95.

### Embodiment 1B - Location of Control

The result of the classification against the psychological term location of control (assuming the values "external" or "internal") is presented in the following table 3.

**Table 3. The result of classification against the term location of control.**

| Labels with the value "true" | Predicted labels | |
|---|---|---|
| | internal | external |
| internal | 92% | 8% |
| external | - | 100% |

The following values were obtained for this term:
F1 = 0.957, accuracy = 95.8%, precision = 91.7%, recall = 100%.

Fig. 2 shows the ROC plot for the classification of the psychological term location of control, in which the area under the curve is 0.99.

### Embodiment 1C - Creativity

The result of the classification against the psychological term creativity (assuming the values "low" or "high") is presented in the following table 4.

**Table 4. The result of classification against the term creativity.**

| Labels with the value "true" | Predicted labels | |
|---|---|---|
| | low | high |
| low | 100% | - |
| high | - | 100% |

The following values were obtained for this term:
F1 = 1, accuracy = 100%, precision = 100%, recall = 100%.

Fig. 3 shows the ROC plot for the classification of the psychological term creativity, in which the area under the curve is 1.00.

### Embodiment 1D - The mean value of the measure F1

Table 5 below presents the results of the classification against the averaged value of the measure F1 from both classes for all personality traits tested. In italics, the characteristics were marked which were not personality traits, but were also classified.

**Table 5. Mean values of the measure F1 for the personality traits tested.**

| **Personality trait** | **Mean value of the measure F1** |
|---|---|
| sense of effectiveness | 0.9565 |
| location of control | 0.9585 |
| predicting problems | 0.916 |
| searching for information | 0.9655 |
| creativity | 1 |
| analyticity (decision making) | 0.9585 |
| impulsiveness (decision making) | 0.917 |
| risk perception (decision making) | 0.899 |
| *numerical skills* | 1 |
| *visual-spatial abilities* | 1 |
| *working memory* | 0.9575 |

### Embodiment 2

A possible implementation of the invention is a computer game made available on an Internet platform or in the form of a smartphone application or a standalone application executed on the user's computer. The game according to this embodiment includes a set of tasks performed by an interviewee or employee in a virtual office environment.

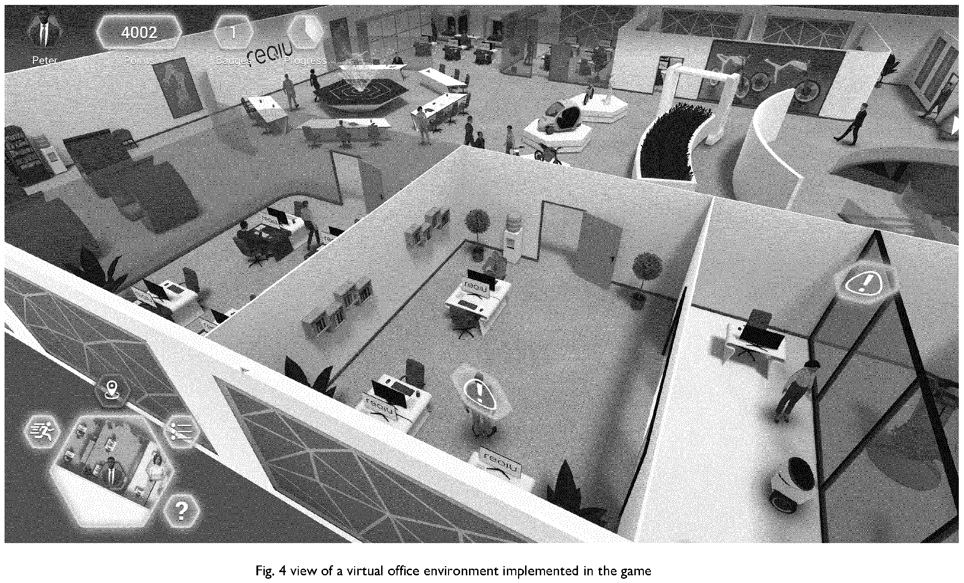

Figure 4 is a view of a virtual office environment implemented in the game.

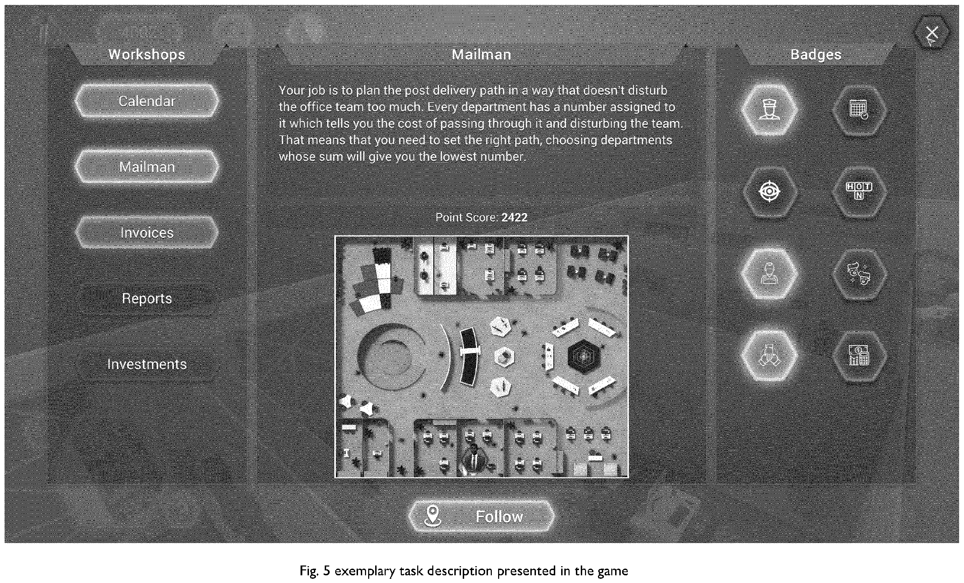

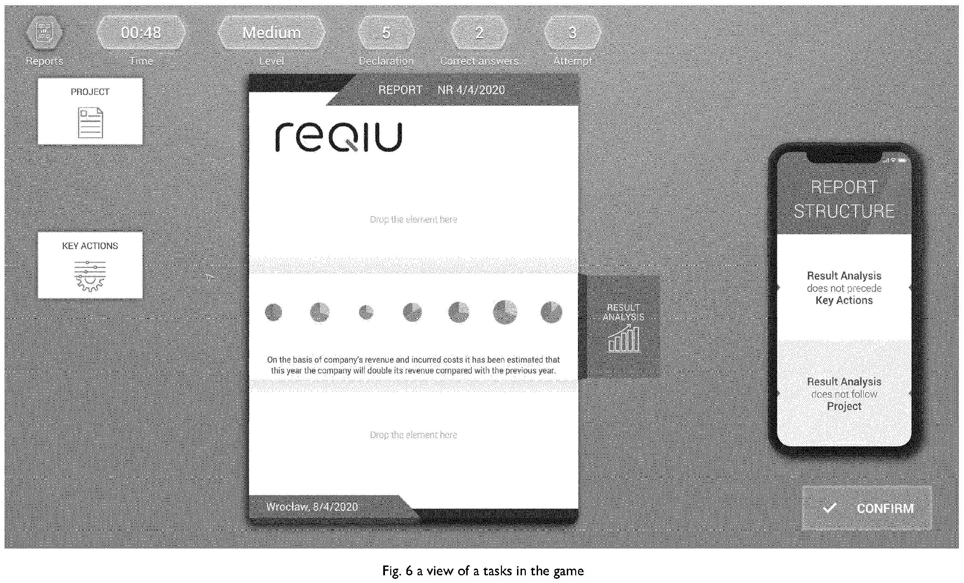

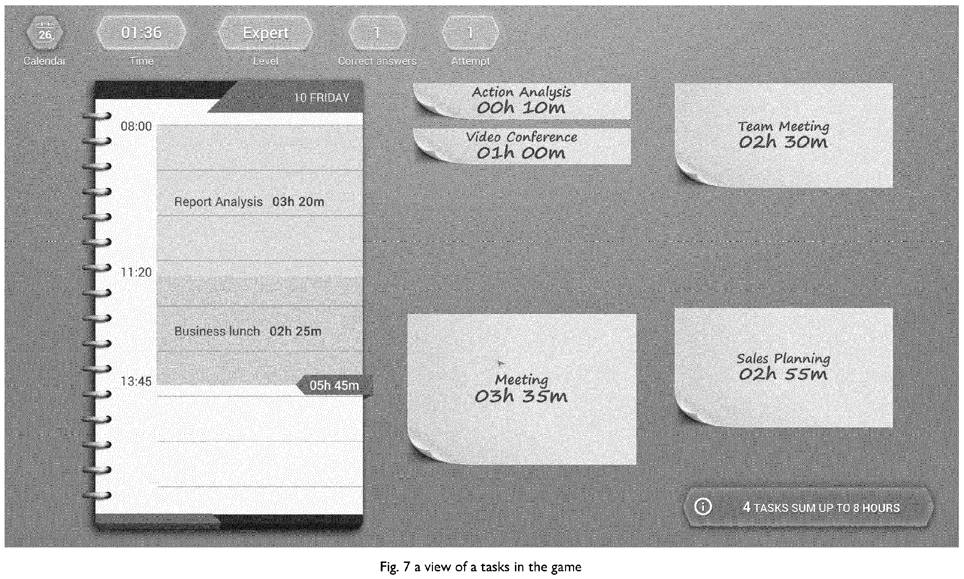

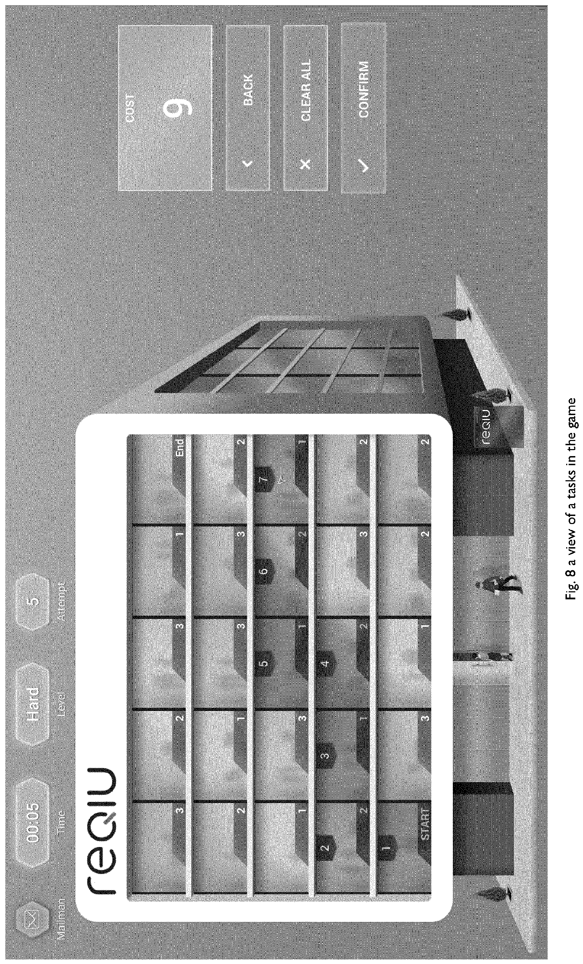

In a particularly preferred embodiment, the invention is a game as in Figure 4, provided on an Internet platform integrated with a score calculation system. In this embodiment, many tasks are presented to the subject in the framework of the game. Figure 5 is a view of an embodiment of the non-limiting task presented to the interviewee in the game, and Figures 6-8 are some non-limiting embodiments of the tasks implemented in the recruitment game.

On the basis of the results obtained by the interviewee in solving the tasks in the game, as well as their behaviour in the virtual office environment, which is presented between successive tasks, the solution according to the invention determines the psychological profile of interviewee or employee. The solution of the invention assesses the intensity of the following personality traits of a player on the basis of their conduct throughout their participation in the game:
1. sense of effectiveness (ps),
2. location of control (uk),
3. searching for information (pi),
4. predicting problems (pp),
5. creativity (k),
6. analyticity (a),
7. impulsiveness (i),
8. risk perception (pr).

The solution of the invention also assesses the intensity of the following characteristics of a player (representing global variables) on the basis of their conduct throughout their participation in the game:
1. numerical skills,
2. visual-spatial abilities,
3. working memory.

The solution of the invention also makes it possible to adapt, by implementing the visual elements specific to the recruiting or assessment body, the gaming environment to the recruiting firm. In the preferred implementation of the invention, this may constitute an additional channel for marketing activities.

According to the implementation of the invention, the identification and measurement of the personality traits of interviewee or employee is carried out on the basis of several thousand measurement points, which are located both in the tasks and in the game world itself. Measurement points provide data to the classifier, which can use algorithms according to Embodiment 1.

In this embodiment, the inference about the psychological profile of interviewee or employee is based on their actual behaviour in a game that reflects the office environment, and thus significantly increases the quality of prediction of the behaviour of interviewee or employee in relation to functioning in the actual work environment. The test determines the personality traits identified in the psychological research that determine the way of functioning in the professional environment.

Then, based on the results of the classifying module, the presentation module in automated manner generates feedback reports that present the intensity of the examined personality traits of interviewee or employee. Therefore, the advantage of the solution is to carry out the recruitment process faster, with greater involvement of potential interviewees and employees, and with less burden on the recruiter team. Thus, the solution according to the invention enables the assessment, comparison and filtering of interviewees and employees, which allows for the selection of an interviewee or employee with a suitable personality profile.

### Embodiment 3

Advantageously, the system of the invention, as well as the computer program product, enables the recruiter to determine what personality traits of the interviewees and employees are desirable. On this basis, it is possible to filter interviewees and employees who took part in the survey, presenting those who best match the recruiter's requirements.

## Claims

1. Method of assessment of the personality profile of a player comprising the steps, in which:
a) a player is provided with access to the game environment, in which he is identified by an identifier, the game environment is three-dimensional and imitates work in an office environment in which the player performs tasks;
b) the behaviour of the player is measured during and between in-game tasks;
c) the intensity of the following personality traits of the player is determined based on the measurements of behaviour:
- sense of effectiveness,
- location of control,
- searching for information,
- predicting problems,
- creativity,
- analyticity,
- impulsiveness,
- risk perception;
and the intensity of the personality traits of the player is presented in the form of a report.

2. Method according to claim 1, **characterized in that** in step c) additionally, based on the measurements of behaviour, the intensity of the following characteristics of the player is assessed, comprising:
- numerical skills,
- visual-spatial abilities,
- working memory.

3. Method according to any of the preceding claims, **characterized in that** the classification of the intensity of personality traits in step c) is carried out with the use of feedforward neural networks, gradient boosted decision trees or adaptive neural networks.

4. Method according to any of the preceding claims, **characterized in that** the player is an employee in a given position or an interviewee for a given position.

5. Method according to any of the preceding claims, **characterized in that** additionally, the model intensity of features for a given position is determined based on the set of data obtained by the current employee in a given position.

6. A computer program product, comprising a computer-readable medium containing encoded computer executable code, wherein the computer executable code is adapted to perform an implemented method including:
a) providing an assessment system of the personality profile of a player, which includes:
- a game with tasks environment module,
- a measurement module,
- a classification module,
- a presentation module,
b) providing by the game with tasks environment module of a three-dimensional game environment, in which computerized tasks are presented, where these tasks are related to the work environment in the office presented in the game;
c) measuring, by the measurement module, the behaviour of a player in the game and during the carrying out of tasks, creating a data set for a given player;
d) carrying out the classification of a player using the classification module based on the data collected by the measurement module for the following personality traits:
- sense of effectiveness,
- location of control,
- searching for information,
- predicting problems,
- creativity,
- analyticity,
- impulsiveness,
- risk perception;
determining the degree of intensity of each of the above characteristics for a player;
e) generating a report by the presentation module for the entity carrying out the process, in which the result of the classification of the intensity of each of the tested personality traits of a player is presented.

7. The computer program product comprising a computer-readable medium containing encoded computer executable code, where the computer executable code is adapted to perform the implemented method according to claim 6, **characterized in that** the implemented method in step d) additionally includes carrying out the classification of a player with on the basis of the data collected by the measurement module for the following characteristics of a player comprising:
- numerical skills,
- visual-spatial abilities,
- working memory;
determining the degree of intensity of each of the above characteristics for a player.

8. The computer program product according to claim 6 or 7, in which the player personality profile scoring system further comprises:
- a model module,
- a reference model defined for a given job position,
- a comparator module,
- a scoring module,
and the method further comprises the steps, in which
a) the model module creates a model of the assessed player on the basis of the result from the classifying module including the intensity of the personality traits under study,
b) the comparator module compares the assessed player's model with the reference model,
c) the scoring module determines the fit of the tested player for a given workplace based on the comparator module results.
